# EUROPÄISCHE PATENTSCHRIFT

(11) **EP 2 199 231 B1**
(45) Veröffentlichungstag und Bekanntmachung des Hinweises auf die Patenterteilung: **18.04.2012**
(21) Anmeldenummer: 09178026.2
(22) Anmeldetag: 04.12.2009
(51) Int. Cl.: B65G 17/00, B65G 35/06, B61B 10/04

(54) **Werkstückträgereinrichtung**
Workpiece mount device
Dispositif de porte-pièce

(30) Priorität: 18.12.2008 DE 102008062357
(43) Veröffentlichungstag der Anmeldung: 23.06.2010
(73) Patentinhaber: Ceratis GmbH, 56307 Dernbach (DE)
(72) Erfinder: Krups, Matthias, 53639 Königswinter (DE); Krups, Peter, 56584 Anhausen (DE)
(74) Vertreter: von Kreisler Selting Werner

(56) Entgegenhaltungen:
- EP-A1- 1 452 463
- EP-A2- 1 332 974
- WO-A1-2008/142766
- WO-A1-2009/027461
- DE-A1-102006 045 575
- DE-B- 1 256 153
- FR-A1- 2 679 164
- GB-A- 612 795

## Beschreibung

Die Erfindung betrifft eine Werkstückträgereinrichtung, die insbesondere auf einen Friktionsförderer, wie einen Rollen-, einen Gurt- oder einen Plattenförderer lose aufgelegt wird.

Mit Hilfe von Fördereinrichtungen werden insbesondere in der Serienfertigung Werkstücke zwischen einzelnen Arbeitsplätzen, an denen beispielsweise eine Montage oder Bearbeitung der Werkstücke erfolgt, transportiert. Hierzu werden die Werkstücke auf Werkstückträgereinrichtungen angeordnet und die Werkstückträgereinrichtungen zusammen mit den Werkstücken durch entsprechende Fördereinrichtungen bewegt. Zum Bewegen der Werkstückträgereinrichtungen sind Friktionsförderer bekannt. Bei Friktionsförderern werden die Werkstückträgereinrichtungen nicht fest mit Fördereinrichtungen verbunden, sondern liegen beispielsweise auf Rollen lose auf. Die Bewegung der Werkstückträgereinrichtungen erfolgt durch auftretende Reibungskräfte zwischen den Rollen, Gurten oder Platten und Reibflächen der Werkstückträgereinrichtung. Friktionsförderer haben insbesondere den Vorteil, dass ein Stauen der Werkstückträgereinrichtungen möglich ist. Hierbei erfolgt während des Stauvorgangs ein Durchrutschen der entsprechenden Antriebseinrichtungen der Friktionsförderer. Ein aufwändiges und kompliziertes Ausklinken aus einer Fördereinrichtung, wie einer Kette, ist bei Friktionsförderern nicht erforderlich. Ferner haben Friktionsförderer den Vorteil, dass Kurven und insbesondere Abzweigungen auf einfache Weise realisiert werden können. Mit Hilfe von Abzweigungseinrichtungen, wie Weichen, können einzelne Werkstückträgereinrichtungen beispielsweise aus- oder eingeschleust werden. Hierdurch weisen Friktionsförderer eine hohe Flexibilität auf. Ein derartiger Friktionsförderer ist in DE 40 36 214 beschrieben.

Sofern es sich bei den Werkstücken um schwere Werkstücke, insbesondere mit einem Gewicht von über 100 kg und/ oder um Werkstücke mit großen Abmessungen handelt, weisen Friktionsförderer den Nachteil auf, dass ungünstige Reibungsverhältnisse, insbesondere in den Kurven und Abzweigungsbereichen auftreten. Auch sind die auftretenden Reibungsverhältnisse bei sich aufstauenden Werkstückträgern nachteilig. Ein weiterer Nachteil von Friktionsförderern für große Werkstücke besteht darin, dass die Förderbahnen sehr breit ausgebildet werden müssen. Hierdurch erhöhen sich die Kosten für derartige Friktionsförderer.

Ein insbesondere auch zum Transport von schweren Werkstücken geeigneter Friktionsförderer ist aus DE 10 2006 045 575 bekannt. Hierzu weist die Werkstückträgereinrichtung ein Bewegungselement auf, das mit einer Reibfläche auf dem Friktionsförderer aufliegt. Mit dem insbesondere plattenförmig ausgebildeten Bewegungselement ist ein Trägerelement vorzugsweise fest verbunden. Das Trägerelement ist vorzugsweise ebenfalls plattenförmig ausgebildet und dient zur Aufnahme eines oder gegebenenfalls mehrerer Werkstücke. Das Trägerelement ist mit Abstützelementen verbunden. Über die Abstützelemente erfolgt eine Aufnahme eines wesentlichen Teils des Gewichts des Werkstücks. Das Gewicht des Werkstücks wirkt somit allenfalls zu einem Teil auf das Bewegungselement. Die mit dem Trägerelement verbundenen Abstützelemente, wie Räder, übertragen die Gewichtskraft auf ein Aufnahmeelement, das beispielsweise Teil des Friktionsförderers sein kann, jedoch vorzugsweise mit den Antriebselementen des Friktionsförderers nicht in Verbindung steht. Das Vorsehen zusätzlicher Abstützelemente, um zumindest einen Teil des Werkstückgewichts nicht auf das Bewegungselement zu übertragen, hat den Vorteil, dass die auftretenden Reibungsverhältnisse zwischen der Reibfläche des Bewegungselements und den Antriebselementen des Friktionsförderers nicht negativ beeinflusst werden.

Ferner ist es durch die Unterteilung der Werkstückträgereinrichtung in ein Bewegungselement und ein Trägerelement möglich, diese unterschiedlich groß auszugestalten. Hierdurch ist es möglich, ein relativ kleines Bewegungselement, das mit einem relativ großen Trägerelement zur Aufnahme von Werkstücken mit großen Abmessungen geeignet ist, zu verbinden. Insbesondere ist es möglich, ein modulares System zu schaffen, bei dem identische Bewegungselemente mit unterschiedlichen Trägerelementen, insbesondere Trägerelementen unterschiedlicher Außenabmessungen verbunden werden.

Der Antrieb des in DE 10 2006 045 575 beschriebenen Friktionsförderers erfolgt über Rollen, die an einer Reibfläche des Bewegungselements anliegen. Beim Anhalten des Werkstückträgers an einer Bearbeitungsstation oder beim Stauen der Werkstückträger ist es erforderlich, dass keine Antriebskraft mehr von den Rollen auf das Bewegungselement übertragen wird. Dies ist dadurch realisiert, dass die angetriebenen Rollen eine Rutschkupplung aufweisen. Die Rutschkupplungen müssen auf den auftretenden Staudruck bezogen exakt justiert werden. Ferner ist ein regelmäßiges Nachjustieren und Warten der Rutschkupplungen erforderlich. Des Weiteren handelt es sich bei Rutschkupplungen um teure Bauteile.

Ferner ist aus FR 2 679 164 nach dem Oberbegriff des Anspruchs 1, ein über eine Antriebs-/Zugstange bewegbarer Werkstückträger bekannt. Die Verbindung zwischen der Antriebsstange und dem Werkstückträger erfolgt über ein Reibungselement. Dies ist über ein Betätigungselement in eine Stellung verschiebbar, in die durch die Reibung hervorgerufene Kraftübertragung unterbrochen ist.

Aufgabe der Erfindung ist es, eine Werkstückträgereinrichtung zu schaffen, mit Hilfe der es möglich ist, einen Friktionsförderer einfacher auszugestalten.

Die Lösung der Aufgabe erfolgt erfindungsgemäß durch die Merkmale des Anspruchs 1.

Die erfindungsgemäße Werkstückträgereinrichtung, die zur losen Auflage auf Friktionsförderern dient, ist insbesondere eine Weiterentwickelung der in DE 10 2006 045 575 beschriebenen Werkstückträgereinrichtung und weist vorzugsweise dieselben wesentlichen Merkmale auf. Die erfindungsgemäße Werkstückträgereinrichtung weist insbesondere ein Bewegungselement auf, das insbesondere plattenförmig ausgebildet ist. Das Bewegungselement liegt mit einer Reibfläche an dem Friktionsförderer zur Übertragung der Bewegung mittels Reibkräften an. Hierbei kann der Friktionsförderer beispielsweise angetriebene Rollen oder Bänder aufweisen. Mit dem Bewegungselement ist ein ebenfalls insbesondere plattenförmig ausgebildetes Trägerelement zur Aufnahme eines Werkstücks verbunden. Das Trägerelement dient insbesondere zur Aufnahme des wesentlichen Gewichts des Werkstücks und weist vorzugsweise insbesondere mehrere, beispielsweise als Räder ausgebildete, unabhängige Abstützelemente auf.

Das Bewegungselement ist über mindestens ein, insbesondere zwei Verbindungselemente mit dem Trägerelement verbunden, wobei die Verbindungselemente insbesondere als Stege oder Säulen ausgebildet sind. Das Verbindungselement weist insbesondere zum losen bzw. lösbaren Verbinden des Bewegungselements mit dem Trägerelement ein Anpresselement auf. Das Anpresselement ist derart ausgestaltet, dass beim Bewegen des Bewegungselements in Transportrichtung von dem Trägerelement auf das Bewegungselement eine Anpresskraft in Richtung des Friktionsförderers, d.h. nach unten, ausgeübt wird. Erfindungsgemäß erfolgt somit aufgrund des Vorsehens eines Anpresselements ein Erzeugen von Anpressdruck bzw. einer Anpresskraft der Reibfläche des Bewegungselements auf den Friktionsförderer. Dies erfolgt insbesondere dadurch, dass bei einer Anfahrsituation zunächst das Bewegungselement von dem Friktionsförderer geringfügig in Transportrichtung bewegt wird. Hierdurch wird das zwischen dem Bewegungselement und dem Trägerelement vorgesehene Anpresselement aktiviert, wobei die Anpresskraft insbesondere im wesentlichen durch das Gewicht des Trägerelements und des gegebenenfalls auf dem Trägerelement angeordneten Werkstücks aufgebracht wird.

Vorzugsweise ist in einer Stausituation ein Deaktivieren des Anpresselements möglich, so dass von dem Trägerelement keine oder nur eine geringe Anpresskraft auf den Friktionsförderer ausgeübt wird. Dies hat zur Folge, dass die Rutschkupplungen der Rollen des Friktionsförderers gegebenenfalls entfallen können, da es aufgrund der erfindungsgemäßen Entlastung des Bewegungselements möglich ist, dass die Rollen in der Stausituation an der Reibfläche des Bewegungselements durchrutschen. Aufgrund des geringen Gewichts des Bewegungselements tritt hierdurch kein großer Verschleiß auf.

Das Anpresselement weist eine Neutralstellung, in der keine Anpresskraft ausgeübt wird, und eine Bewegungsstellung, in der Anpresskraft übertragen wird, auf. Mit dem Anpresselement ist ein Betätigungselement zum Überführen des Anpresselements in die Neutralstellung und/oder die Bewegungsstellung verbunden. Das Betätigungselement weist erfindungsgemäß ein Anhebeelement auf, wobei das Anhebeelement eine an dem Betätigungselement oder dem Anpresselement angeordnete gegenüber einer Horizontalen geneigte Fläche aufweist, so dass ein Verschieben des Betätigungselements ein Anheben des Bewegungselements bewirkt.

Vorzugsweise weist das Anpresselement eine in einem Winkel zur Transportrichtung ausgerichtete Anpressfläche auf, wobei die Anpressfläche vorzugsweise an dem Trägerelement angeordnet und insbesondere eine Ausnehmung an dem Trägerelement vorgesehen ist. Der Winkel der Anpressfläche, die vorzugsweise quer zur Transportrichtung bzw. quer zum Trägerelement ausgerichtet ist, ist vorzugsweise kleiner als 90°. Insbesondere weist die Anpressfläche zur Transportrichtung, d.h. üblicherweise zur Horizontalen, einen Winkel von 30° bis 60° auf. An der Anpressfläche liegt in bevorzugter Ausführungsform ein Anlageelement des Anpresselements an. Ist die Anpressfläche an dem Trägerelement angeordnet, so ist das Anlageelement an dem Bewegungselement angeordnet, wobei es sich bei dem Anlageelement in einfachster Ausführungsform lediglich um ein gegebenenfalls abgerundetes Ende des steg- oder säulenförmigen Verbindungselements handeln kann.

Erfolgt nun ein Bewegen des Bewegungselements durch den Friktionsförderer, so gelangt das Anlageelement mit der Anpressfläche in Anlage. Aufgrund der Neigung der Anpressfläche in Transportrichtung gleitet das Anlageelement an der Anpressfläche geringfügig nach unten bzw. in Richtung des Friktionsförderers. Hierdurch wird der Anpressdruck an dem Friktionsförderer erhöht. Hierbei ist die Höhe des Anpressdrucks im Wesentlichen von dem Gewicht des Trägerelements sowie des auf dem Trägerelement angeordneten Werkstücks abhängig. Dies hat zur Folge, dass bei schweren Werkstücken hohe Anpressdrücke realisierbar sind.

Bei einer Stausituation erfolgt ein Deaktivieren des Anpresselements beispielsweise dadurch, dass gleichzeitig mit dem Trägerelement auch das Bewegungselement angehalten wird. Dies führt dazu, dass das Anlageelement in einen geringen Abstand zur Anpressfläche gelangt, so dass das Werkstück und das Trägerelement über die Anpressfläche keinen Druck mehr auf das Bewegungselement ausüben. Hierdurch wird die Anpresskraft deutlich verringert und entspricht im Idealfall nur noch der Gewichtskraft des Bewegungselements. Es ist daher möglich, beispielsweise in Stausituationen, ein Durchrutschen der angetriebenen Rollen des Friktionsförderers an der Reibungsfläche zuzulassen.

Bei einer besonders bevorzugten Ausführungsform der erfindungsgemäßen Werkstückträgereinrichtung weist das Anpresselement eine zweite Anpressfläche auf, die der ersten Anpressfläche gegenüber liegt. In Transportrichtung ist die zweite Anpressfläche somit vorzugsweise hinter der ersten Anpressfläche angeordnet, wobei die Neigung der zweiten Anpressfläche vorzugsweise derjenigen der ersten Anpressfläche entgegen gerichtet ist. Der Winkel der zweiten Anpressfläche ist hierbei vorzugsweise identisch demjenigen der ersten Anpressfläche. Durch die zweite Anpressfläche ist es möglich, insbesondere in besonderen Fahrsituationen gegebenenfalls über das Anlageelement eine Anpresskraft auf das Bewegungselement in Richtung des Friktionsförderers auszuüben. Dies ist beispielsweise bei Kurvenfahrten relevant. Aufgrund der Trennung zwischen Trägerelement und Bewegungselement ist es möglich, dass das Trägerelement zusammen mit dem darauf angeordneten Werkstück insbesondere in Kurvenfahrten eine höhere Geschwindigkeit aufweist als das Bewegungselement. Hierdurch löst sich das Anlageelement von der ersten Anpressfläche. Ohne Vorsehen einer zweiten Anpressfläche würde dies dazu führen, dass sich das Trägerelement bewegt, beispielsweise ausrollt, bis es vom Bewegungselement wieder eingeholt ist und das Anlageelement wieder an der ersten Anpressfläche anliegt. Dies würde zu einer ruckelnden Bewegung des Trägerelements führen. Der horizontale Abstand zwischen den beiden Anpressflächen ist hierbei geringfügig größer als die Ausdehnung des Anlageelements in dieser Richtung, so dass nach dem Lösen des Anlageelements von der ersten Anpressfläche bis zum Anliegen des Anlageelements an der zweiten Anpressfläche nur ein geringer Weg von vorzugsweise wenigen Millimetern zurückgelegt werden muss. Hierdurch kann ein annäherndes ruckelfreies Bewegen des Trägerelements auch in Kurven realisiert werden.

Besonders bevorzugt ist es, dass die erste und/ oder die zweite Anpressfläche konkav ausgebildet ist. Insbesondere ist die erste und/ oder zweite Anpressfläche teilkugel- oder teilkegelförmig ausgebildet. Dies ist insbesondere bei Kurvenfahrten vorteilhaft, da hierdurch ein Verklemmen vermieden ist. Ferner führt der bei Kurvenfahrten auftretende Versatz zwischen dem Bewegungselement und dem Trägerelement dazu, dass der Druck auf das Bewegungselement über das Anpresselement erhöht wird.

In einer weiteren bevorzugten Ausführungsform ist das Anlageelement des Anpresselements derart ausgebildet, dass es eine konvexe Oberfläche aufweist. Insbesondere ist das Anlageelement als Kugel oder Teilkugel ausgebildet und weist somit vorzugsweise eine teilkugelförmige, kugelförmige, teilkegelförmige oder kegelförmige Oberfläche auf.

Bei einer bevorzugten Ausführungsform erfolgt das Verbinden zwischen dem Trägerelement und dem Bewegungselement ausschließlich über das Anpresselement, wobei die Verbindung ausschließlich über Reibschluss erfolgt. Dies hat den Vorteil, dass das Trägerelement, beispielsweise zur Wartung, von der Transportbahn abgenommen werden kann, wobei das Bewegungselement auf dem Friktionsförderer angeordnet bleibt. Es ist somit nicht erforderlich, beispielsweise Abdeckungen des Friktionsförderers zu entfernen, um das Bewegungselement von dem Friktionsförderer herunternehmen zu können. Dies hat den Vorteil, dass der Friktionsförderer zumindest in großen Bereichen abgedeckt werden kann, wobei lediglich ein Schlitz vorgesehen sein muss, durch den die vorzugsweise zwei säulenförmigen Verbindungselemente ragen.

Bei einer besonders bevorzugten Weiterbildung der erfindungsgemäßen Werkstückträgereinrichtung ist ein Betätigungselement zum Verschieben des Bewegungselements relativ zum Trägerelement in eine insbesondere horizontale Richtung vorgesehen. Durch das Betätigungselement ist es möglich, dass Bewegungselement beispielsweise aus einer Transportstellung, in der das Anlageelement an der ersten Anpressfläche anliegt, in eine Neutralstellung zu verschieben, in der keine Anpresskraft von dem Anpresselement auf das Betätigungselement übertragen wird. In dieser Stellung liegt das Anlageelement weder an der ersten noch an der zweiten Anpressfläche an.

Vorzugsweise ist das insbesondere stabförmig ausgebildete Betätigungselement mit einem Anfahrelement verbunden. Durch das Anfahrelement erfolgt, beispielsweise bei einer Stausituation der Werkstückträgereinrichtung, ein Betätigen des Betätigungselements. Ebenso kann das Anfahrelement zum Betätigen des Betätigungselements an einer Bearbeitungsstation dienen. Das insbesondere fest mit dem Betätigungselement verbundene Anfahrelement kann entsprechend einer Stoßstange an einer in Förderrichtung Vorderseite der Werkstückträgereinrichtung angeordnet sein.

Bei einer besonders bevorzugten Ausführungsform ist das Betätigungselement derart ausgebildet, dass beim Überführen in die Neutralstellung, nicht nur, wie vorstehend an unterschiedlichen bevorzugten Ausführungsformen beschrieben, ein Unterbrechen bzw. Verringern der Kraftübertragung von dem Trägerelement auf das Anpresselement erfolgt, sondern gleichzeitig auch eine Verringerung der Reibungskräfte zwischen dem Bewegungselement und dem Förderelement, wie dem Friktionsförderer, erfolgt. Dies erfolgt vorzugsweise durch Anheben des Bewegungselements in der Neutralstellung. Hierzu weist das Verbindungselement des Betätigungselements erfindungsgemäß ein Anhebeelement auf. Bei dem Anhebeelement handelt es sich um eine gegenüber der Horizontalen geneigte Fläche. Beispielsweise weist das Verbindungselement des Betätigungselements eine in Fahrtrichtung nach unten geneigte Fläche auf, an die ein Pin oder Ansatz des Bewegungselements in Anlage gelangt, wenn das Betätigungselement zum Überführen in Neutralstellung betätigt wird. Hierdurch erfolgt ein Gleiten des Pins oder Ansatzes an der schrägen Fläche des Anhebeelements, so dass ein Anheben des Bewegungselements erfolgt. Insbesondere liegt an der geneigten Fläche des Anhebeelements, das insbesondere zylindrische oder kugelförmig ausgebildete Anlageelement des Anpresselements an. Das Anlageelement liegt somit in der Bewegungsposition an einer Anpressfläche und in der Neutralposition an einer geneigten Fläche des Anhebeelements an. Das Anlageelement weist somit eine Doppelfunktion auf.

Bei der bevorzugten Weiterbildung, bei der ein Anheben des Bewegungselements erfolgt, können als Fördereinrichtung nicht nur Friktionsförderer, sondern auch andere Föderer, wie beispielsweise Kettenförderer und dergleichen verwendet werden. Statt einer durch Reibung übertragenen Kraft zur Bewegung des Trägerelements ist es auch möglich, eine formschlüssige Verbindung vorzusehen. Hierbei wird durch Anheben des Bewegungselements der Formschluss aufgehoben.

In besonders bevorzugter Ausführungsform ist mit dem Trägerelement der Werkstückträgereinrichtung, das zur Aufnahme von insbesondere schweren Werkstücken dient, mindestens ein Abstützelemente verbunden. Bei den vorzugsweise mehreren Abstützelementen handelt es sich insbesondere um Rollen. Die Werkstückträgereinrichtung ist in besonders bevorzugter Ausführungsform, vorzugsweise wie in DE 10 2006 045 575 beschrieben, weitergebildet.

Nachfolgend wird die Erfindung anhand einer bevorzugten Ausführungsform unter Bezugnahme auf die anliegenden Zeichnungen näher erläutert.

Es zeigen:
- Fig. 1: eine schematische Unteransicht einer bevorzugten Ausführungsform der Werkstückträgereinrichtung,
- Fig. 2: eine schematische Seitenansicht einer bevorzugten Ausführungsform der Werkstückträgereinrichtung in Richtung des Pfeils II in Fig. 1,
- Fig. 3: eine schematische Schnittansicht eines Friktionsförderers, der insbesondere zum Bewegen von Werkstückträgereinrichtungen nach Fig. 1 oder 2 geeignet ist,
- Fig. 4: eine schematische Schnittansicht entlang der Linie IV-IV in Fig. 1, wobei die Werkstückträgereinrichtung in Neutral- bzw. Stoppposition dargestellt ist,
- Fig. 5: eine schematische Schnittansicht entlang der Linie IV-IV in Fig. 1, wobei die Werkstückträgereinrichtung in Bewegungsposition dargestellt ist,
- Fign. 6 und 7: schematische Schnittansichten einer weiteren bevorzugten Ausführungsform der Werkstückträgereinrichtung und
- Fign. 8 und 9: schematische Schnittansichten einer weiteren bevorzugten Ausführungsform der Werkstückträgereinrichtung.

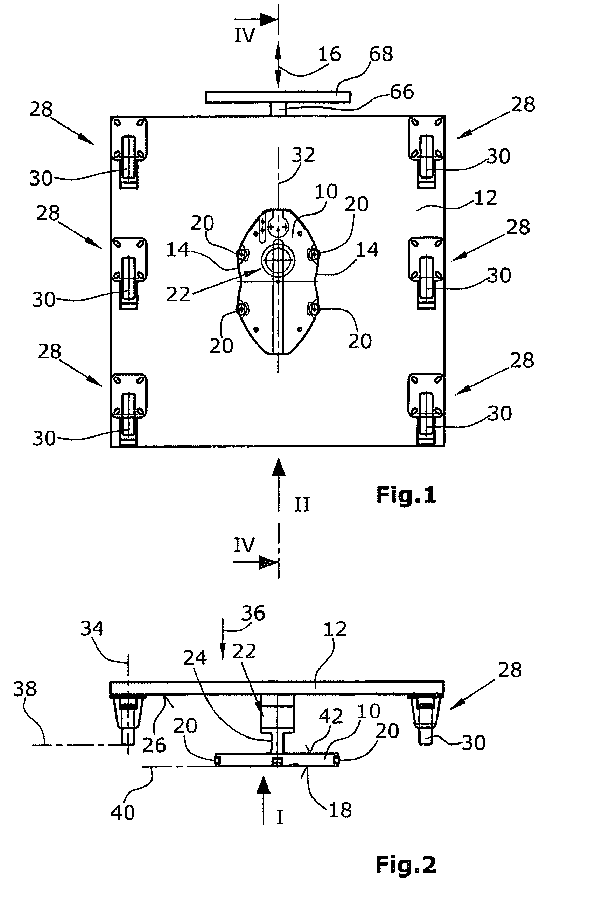

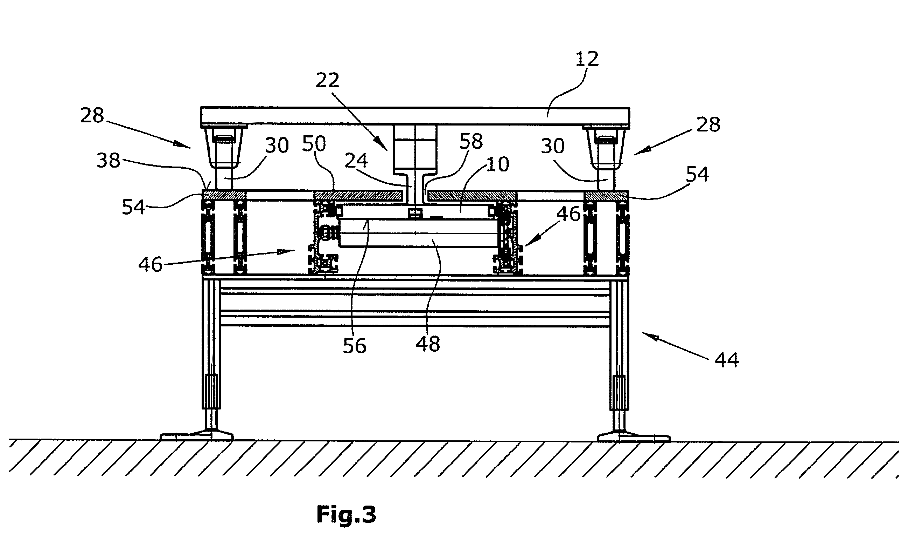

Die in den Fign. 1 und 2 dargestellte, bevorzugte Ausführungsform der erfindungsgemäßen Werkstückträgereinrichtung weist ein Bewegungselement 10 sowie ein Trägerelement 12 auf. Das Bewegungselement 10 weist eine im Wesentlichen ovale Außenkontur auf, die an zwei einander gegenüberliegenden Seiten eine bogenförmige Einbuchtung 14 aufweist. Die Einbuchtungen 14 sind bezogen auf die Transportrichtung 16 seitlich angeordnet. Hierdurch ist das Bewegen des Bewegungselements um Kurven oder Abzweigungen erleichtert. Das Bewegungselement 10 weist eine ebene, als Reibfläche ausgebildete Unterseite 18 auf. An der Reibfläche 18 liegen bei Verwenden der Werkstückträgereinrichtung in Verbindung mit einem Rollenförderer die Antriebsrollen 48 (Fig. 3) an. An den Außenseiten des Bewegungselements 10 können insbesondere zur Reibungsverringerung in Kurven und dergleichen Rollen 20 oder ähnliche Gleitelemente vorgesehen sein.

Das Bewegungselement 10 ist über ein Verbindungselement 22 mit dem Trägerelement 12 verbunden. Das Verbindungselement 22 ist vorzugsweise stegförmig ausgebildet und weist an dem in Richtung des Bewegungselements weisenden Ende eine Verjüngung auf, so dass das Verbindungselement 22 in diesem Bereich als kreiszylindrischer Steg 24 ausgebildet ist. In dem oberhalb des zylindrischen Stegs 24 ausgebildeten Teil des Verbindungselements 22 kann ein Gelenk zur gelenkigen Verbindung des Bewegungselements 10 mit dem Trägerelement 12 vorgesehen sein.

An einer Unterseite 26 des insbesondere plattenförmig ausgebildeten Trägerelements 12 sind im dargestellten Ausführungsbeispiel sechs Abstützelemente 28, die jeweils eine Abstützrolle 30 aufweisen, angeordnet. Die sechs Abstützelemente 28 sind symmetrisch zu einer Mittellinie 32 des Trägerelements 12 angeordnet. Im dargestellten Ausführungsbeispiel ist auch das Verbindungselement 22 symmetrisch zur Mittellinie 32 angeordnet. Die einzelnen Abstützrollen 30 sind jeweils um eine Schwenkachse 34 schwenkbar, so dass die erfindungsgemäße Werkstückträgereinrichtung auf einfache Weise um Kurven geführt werden kann.

Senkrecht zu einer in Richtung eines Pfeils 36 wirkenden Gewichtskraft, die im dargestellten Ausführungsbeispiel der Abstützrichtung entspricht, verläuft eine Abstützebene 38. Die Abstützebene 38 ist diejenige Ebene, in der im dargestellten Ausführungsbeispiel sämtliche sechs Auflagepunkte bzw. Auflagebereiche der Rollen 30 angeordnet sind. An einem horizontalen Abstand zu der Abstützebene 38 ist die Bewegungselementebene 40, in der insbesondere auch die Reibfläche 18 angeordnet ist, vorgesehen. Auch eine Oberseite 42 des Bewegungselements 10 weist vorzugsweise einen Abstand zu der Abstützebene 40 auf. Dies ist, wie nachstehend erläutert, zweckmäßig, um ein Abdeckelement 50 (Fig. 3) vorzusehen. In einem Schlitz des Abdeckelements 50 ist der steg- bzw. säulenförmige Teil 24 des Verbindungselements 22 angeordnet.

Anhand der Fig. 3 wird im Folgenden ein Rollenförderer beschrieben, der zur Bewegung der in den Fign. 1. und 2 dargestellten Werkstückträgereinrichtung geeignet ist. Auf einem insbesondere höhenverstellbaren Gestell 44 sind rahmenförmige Trägerelemente 46 angeordnet. Die Trägerelemente 46 tragen mehrere in Transportrichtung 16 hintereinander angeordnete, als Antriebselemente 48 dienende Rollen. Die Oberfläche der Rollen 48 liegt an der Reibfläche 18 des Bewegungselements 10 an. Auf Grund der auftretenden Reibung zwischen den Antriebsrollen 48 und der Reibfläche 18 erfolgt ein Bewegen des Bewegungselements 10 und damit des über das Verbindungselement 22 mit dem Bewegungselement 10 verbundenen Trägerelements 12 in Bewegungs- bzw. Transportrichtung 16. Die Rollen 48 werden beispielsweise über Zahnräder oder eine andere nicht dargestellte Antriebseinrichtung angetrieben. Oberhalb der Antriebsrollen 48 ist ein Abdeckelement 50 vorgesehen.

Durch das Abdeckelement 50 ist ein im Querschnitt im Wesentlichen rechteckiger Raum ausgebildet, in dem das Bewegungselement 10 angeordnet ist. Das Bewegungselement 10 ist somit zwischen den Antriebselementen 48 und dem Abdeckelement 50 angeordnet. Das Abdeckelement 50 dient zur Verringerung der Verschmutzung der Antriebselemente 48.

Das Abdeckelement 50 weist einen in Transportrichtung 16 (senkrecht zur Zeichenebene in Fig. 3) verlaufenden Schlitz auf, in dem der zylindrische Teil 24 des Verbindungselements 22 angeordnet ist.

Im dargestellten Ausführungsbeispiel ist auf derselben Höhe wie das Abdeckelement 50 auf beiden Seiten der Antriebselemente 48 jeweils ein Abstützelement 54 angeordnet. Auf dem ebenen, als Rollbahn ausgebildeten Abstützelement 54 erfolgt ein Abrollen der Abstützrollen 30.

Um die anhand der Fign. 1 und 2 beschriebene Werkstückträgereinrichtung mit dem in Fig. 3 dargestellten Friktionsförderer bewegen zu können, ist ein horizontaler Abstand zwischen einer Antriebsebene und einer Abstützebene vorgesehen. Die Abstützebene 38 entspricht der Oberseite der Aufnahmeelemente 54. Die Antriebsebene entspricht der Oberseite 56 der Antriebselemente 48 und fällt mit der Reibebene 18 des Bewegungselements 10 zusammen.

Im Bereich einer Abzweigung ist es erforderlich, dass die bahnförmigen Aufnahmeelemente in eine vergrößerte Fläche übergehen. Da die an der Unterseite des Trägerelements 12 vorgesehenen Abstützelemente 28 Lenkrollen aufweisen, die um die Schwenkachse 34 frei drehbar sind, passt sich die Stellung der Rollen der Bewegung des Trägerelements 12 automatisch an. Die äußeren Rollen 30 müssen bei einer Bewegung des Trägerelements 12 um die Kurve herum über den geradeaus weiterführenden Schlitz rollen. Dies ist problemlos möglich, da der Durchmesser der Rollen deutlich größer ist als die Schlitzbreite.

Das Bewegungselement 10 ist über ein Anpresselement 60 lösbar verbunden. Das Anpresselement weist im dargestellten Ausführungsbeispiel eine erste Anpressfläche 64 und eine zweite Anpressfläche 72 auf. Die erste Anpressfläche 64 ist in Transportrichtung 16 geneigt. Die zweite Anpressfläche 72 ist in entgegengesetzte Richtung geneigt und liegt der ersten Anpressfläche 64 gegenüber. Beide Anpressflächen 64,72 erstrecken sich quer zur Transportrichtung 16 bzw. quer zum Trägerelement 12. Ferner weist das Anpresselement ein mit dem Verbindungselement 22 verbundenes Anlageelement 76 auf. Im dargestellten Ausführungsbeispiel handelt es sich bei dem Anlageelement 76 um eine Rolle, die um eine mit dem Verbindungselement 22 verbundene Querachse 78 drehbar ist.

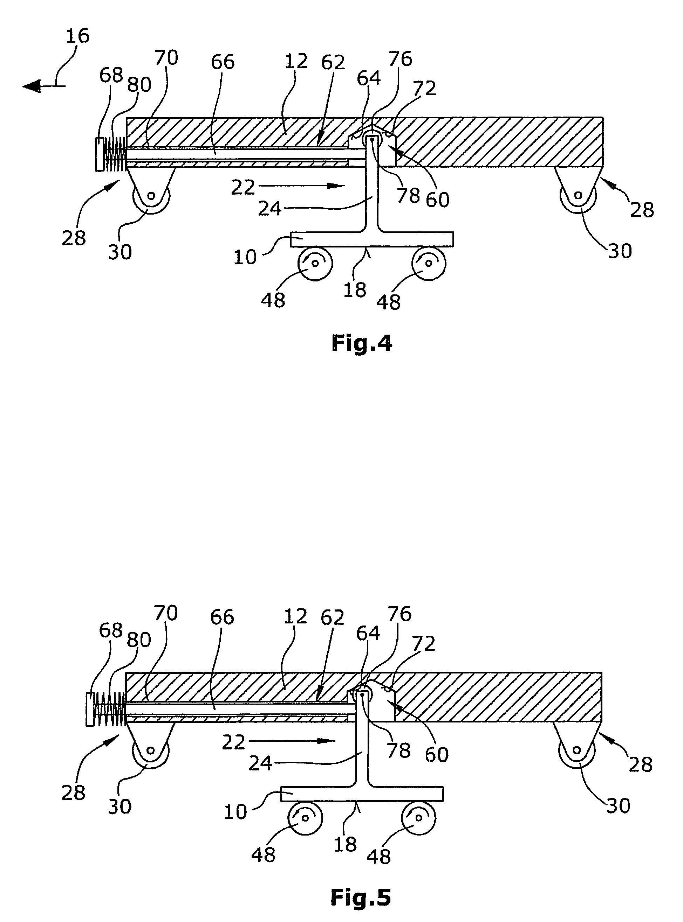

Aus der in Fig. 4 dargestellten Neutral- bzw. Stoppposition erfolgt beispielsweise beim Anfahren, d.h. Drehen der Rollen 48 (in Fig. 4 gegen den Uhrzeigersinn), ein Bewegen des Bewegungselements 10 in Transportrichtung 16, d.h. in Fig. 4 nach links. Hierdurch gelangt das Anlageelement 76 in Anlage mit der ersten Anpressfläche 64. Aufgrund des Gewichts des Trägerelements 12 sowie des ebenfalls auf dem Trägerelement angeordneten Werkstücks wird eine in Fig. 4 nach unten in Richtung des Friktionsförderers 48 gerichtete Anpresskraft ausgeübt. Hierdurch ist auf einfache Art und Weise ein Bewegen des Trägerelements 12 ausschließlich aufgrund einer Reibverbindung zwischen dem Bewegungselement 10 und dem Trägerelement 12 möglich, die von den Anpresselementen 64,72 erzeugt wird.

Beispielsweise ist in Kurvenfahrten die Geschwindigkeit des Trägerelements 12 gegebenenfalls höher als die Geschwindigkeit des Bewegungselements 10. Dies führt dazu, dass das Anlageelement 76 nicht mehr an der ersten Anpressfläche 64 anliegt. Aufgrund der gegenüberliegenden zweiten Anpressfläche 72 wird wiederum eine Anpresskraft auf das Bewegungselement 10 ausgeübt, so dass auch in Kurven ein annähernd ruckelfreies Bewegen des Trägerelements 12 möglich ist. Sobald die Geschwindigkeit des Bewegungselements 10 sodann wieder größer ist als diejenige des Trägerelements 12, wird die Anlage zwischen dem Anlageelement 76 und der zweiten Anpressfläche 72 wieder gelöst und das Anlageelement 76 gelangt wieder mit der ersten Anpressfläche 64 in Anlage.

Zum horizontalen Verschieben des Bewegungselements 10 aus einer Bewegungsposition (Fig. 5) in eine Stoppposition (Fig. 4) ist eine Verschiebeeinrichtung vorgesehen. Im dargestellten Ausführungsbeispiel weist die Verschiebeeinrichtung ein Betätigungselement 62 auf. Das Betätigungselement 62 weist ein stabförmiges Verbindungselement 66 auf, das fest mit einem, ähnlich einer Stoßstange ausgebildeten, Anfahrelement 68 verbunden ist. Das Verbindungselement 66 ist in einer insbesondere als Bohrung ausgebildeten Öffnung 70 des Trägerelements 12 angeordnet und in diesem in Längsrichtung verschiebbar geführt.

Zum Überführen des Bewegungselements 10 aus der Bewegungsposition (Fig. 5) in die Stoppposition (Fig. 4) ist es erforderlich, das Betätigungselement 62 in Richtung eines Pfeils, d.h. in Fig. 5 nach rechts, zu verschieben. Dies erfolgt beispielsweise dadurch, dass das Anfahrelement 68 gegen einen Stopper an einer Bearbeitungsposition fährt oder auf eine in Transportrichtung voran fahrende Werkstückträgereinrichtung auffährt. Hierdurch wird die Betätigungseinrichtung 62 in die in Fig. 4 dargestellte Lage verschoben. Durch das horizontale Verschieben des Bewegungselements 10 relativ zum Trägerelement 12 wird das Anlageelement 76 in eine Position verschoben, in der es an keiner der beiden Anpressflächen 64,72 anliegt. Es wird somit von dem Trägerelement 12 und dem sich gegebenenfalls auf dem Trägerelement 12 befindlichen Werkstück keine Kraft auf das Bewegungselement 10 übertragen. Dies hat zur Folge, dass beispielsweise die Rollen 48 an der Reibfläche 18 durchrutschen. Aufgrund der geringen auftretenden Reibkraft erfolgt hierdurch keine starke Abnutzung der Reibfläche 18 oder den Oberflächen der Rollen 48.

Um das Bewegungselement 10 aus der Neutral- bzw. Stoppposition (Fig. 4) wieder in die Bewegungsposition (Fig. 5) zu überführen, muss das Betätigungselement 62 wieder freigegeben werden. Dies erfolgt beispielsweise durch Zurückziehen des Stoppers an einer Bearbeitungsstation oder dadurch, dass die Stausituation aufgehoben wird. Hierdurch gelangt das Betätigungselement 62 wieder in die in Fig. 4 dargestellte Stellung, wobei die Bewegung des Betätigungselements 62 gegebenenfalls durch eine zwischen dem Anfahrelement 68 und dem Trägerelement 12 angeordnete Feder 80 unterstützt wird.

Bei der in den Fign. 4 und 5 dargestellten Ausführungsform kann ein dem Betätigungselement 62 entsprechendes Betätigungselement auch auf der in Fig. 4 und 5 rechten Seite bzw. der Rückseite der Werkstückträgereinrichtung angeordnet sein. Hierdurch ist ein Bewegen der Werkstückträgereinrichtung in beide Richtungen möglich.

Da der erste Werkstückträger bzw. das erste Betätigungselement des Werkstückträgers gegen einen stationären Stopper fährt, bewirkt auch ein Auffahren eines weiteren Werkstückträgers nicht ein Zurückdrücken des Betätigungselements, so dass die Werkstückträger an der Vorder- und an der Rückseite jeweils ein insbesondere stoßstangenartiges Betätigungselement aufweisen können.

Ferner ist es auch möglich, dass die Stoßstangen auf der Vorderseite bzw. Rückseite der Werkstückträger in unterschiedlicher Höhe angeordnet sind, so dass ein Werkstückträger in der Stausituation nicht gegen das Anfahrelement 68 des vorherigen Werkstückträgers, sondern beispielsweise gegen dessen Grundkörper fährt.

Eine weitere Möglichkeit besteht darin, dass an der Vorderseite und der Rückseite des Werkstückträgers getrennt wirkende Stoßstangen vorgesehen sind.

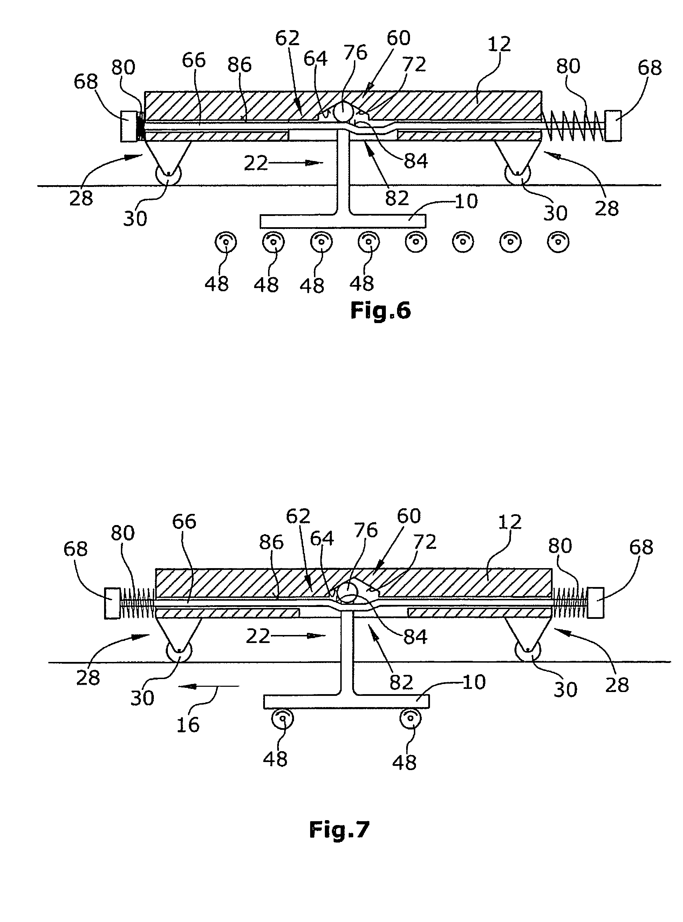

Bei einer weiteren bevorzugten Ausführungsform (Figuren 6 und 7) sind identische oder ähnliche Bauteile mit denselben Bezugszeichen gekennzeichnet.

Der wesentliche Unterschied dieser Ausführungsform besteht darin, dass das Verbindungselement 66 des Betätigungselements 62 nicht fest mit dem Verbindungselement bzw. Steg 22 des Bewegungselements 10 verbunden ist. Vielmehr weist das Verbindungselement 66 im Bereich des Anpresselements 60 eine Schräge als Anhebeelement 82 auf. Im dargestellten Ausführungsbeispiel ist das Anhebeelement 82 einstückig mit dem Verbindungselement 66 ausgebildet und weist eine schräge bzw, gegenüber der Horizontalen geneigte Fläche 84 auf.

Aus einer Bewegungsposition (Figur 7), in der der Werkstückträger 12 in Richtung des Pfeils 16 transportiert wird, gelangt das Anlageelement 76 des Anpresselements 60 aufgrund des Bewegens des Anfahrelements 68 und das mit diesem verbundenen Verbindungselement 66 in eine Außereingriffposition bzw. Neutralposition. Das Anlageelement 76, das in der Bewegungsposition an der Anpressfläche 64 anliegt, wäre somit zunächst von der Fläche 64 gelöst, da die geneigte Fläche 84 des Anhebeelements 82 gegen das Anlageelement 76 drückt und dieses in Figur 7 nach rechts verschiebt bzw. anhält und sich das Förderelement 48 in Figur 7 um ein kleines Stück weiter nach links bewegt. Das Anlageelement 76 gleitet nunmehr über die geneigte Fläche 84. Da diese ansteigt, erfolgt ein Anheben des Anlageelements 76, bis dieses auf einer im dargestellten Ausführungsbeispiel horizontalen Fläche 86 des Verbindungselements 66 aufliegt (Figur 6). In dieser Stellung kann das Anlageelement 76 auch wieder an den Anpressflächen 64, 72 anliegen, da das Verbindungselement 22 einen Abstand zu den Antriebsrollen 48 aufweist und somit keine Antriebskraft auf das Trägerelement 12 übertragen werden kann.

Sobald eine Stausituation aufgehoben ist, wird das Betätigungselement 62, wie anhand der vorstehenden Ausführungsform (Figur 4, 5) beschrieben, durch die Feder 80 wieder in die in Figur 7 dargestellte Position überführt, so dass das Anlageelement 76 wieder an der Fläche 64 anliegt und sodann wieder eine Kraftübertragung von den Rollen 48 über das Bewegungselement 10, über die Fläche 64 auf das Trägerelement 12 wirkt.

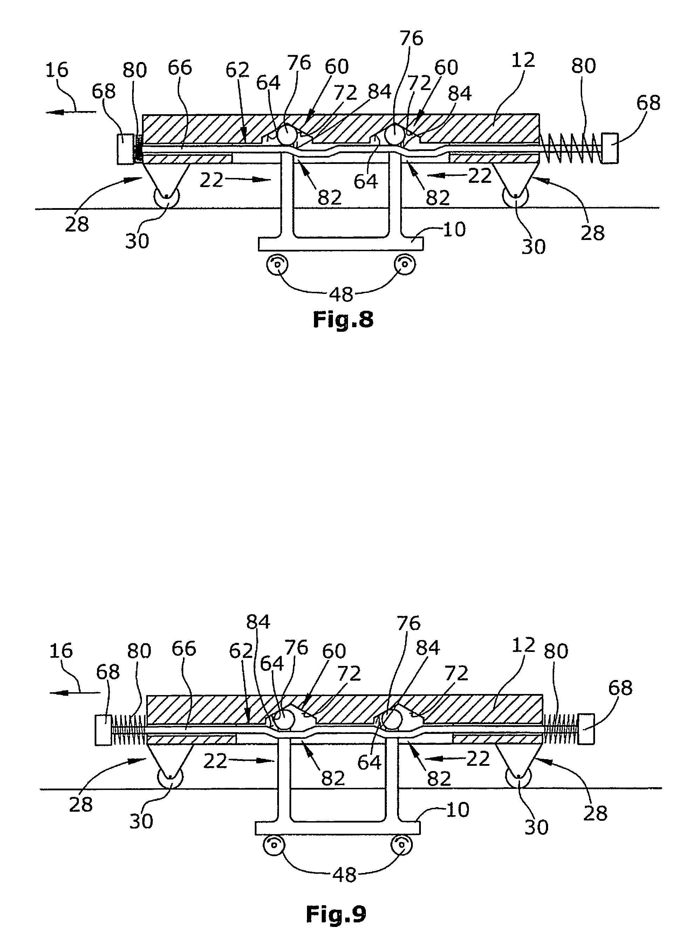

Die in den Figuren 8 und 9 dargestellte weitere bevorzugte Ausführungsform entspricht im Wesentlichen der in Figur 6, 7 dargestellten Ausführungsform, so dass ähnliche und identische Bauteile mit denselben Bezugszeichen gekennzeichnet sind.

Der wesentliche Unterschied besteht darin, dass das Bewegungselement 10 nicht nur mit einem Verbindungselement, sondern mit zwei Verbindungselementen 22 verbunden ist. Dementsprechend sind auch zwei Anpresselemente 60 sowie zwei Anhebeelemente 82 vorgesehen. Diese werden über das gemeinsame Betätigungselement 62 betätigt und beispielsweise aus der Bewegungsposition (Figur 9) in die Neutralposition (Figur 8) überführt.

Das Vorsehen von zwei in Fahrtrichtung 16 hintereinander oder auch nebeneinander angeordneten Verbindungselementen 22 ist selbstverständlich auch bei der anhand der Figur 4 und 5 dargestellten Ausführungsform möglich.

## Patentansprüche

1. Werkstückträgereinrichtung zur losen Auflage auf Friktionsförderern, mit
einem Bewegungselement (10) mit einer am Friktionsförderer anliegenden Reibfläche (18) zur Übertragung der Bewegung mittels Reibkräften, und einem mit dem Bewegungselement (10) über ein Verbindungselement (22) verbundenen Trägerelement (12) zur Aufnahme eines Werkstücks, wobei das Verbindungselement (22) ein Anpresselement (60) aufweist, das derart ausgebildet ist, dass beim Bewegen des Bewegungselements (10) in Transportrichtung (16) von dem Trägerelement (12) auf das Bewegungselement (10) aufgrund des Gewichts des Trägerelements (12) und/ oder des auf dem Trägerelement (12) angeordneten Werkstücks eine Anpresskraft in Richtung des Friktionsförderers ausübt,
wobei das Anpresselement (60) eine Neutralstellung, in der keine Anpresskraft ausgeübt wird und eine Bewegungsstellung, in der Anpresskraft übertragen wird, aufweist, und wobei die Einrichtung ein mit dem Anpresselement (60) verbundenes Betätigungselement (62) zum Überführen des Anpresselements (60) in die Neutralstellung und/ oder eine Bewegungsstellung aufweist,
**dadurch gekennzeichnet, dass**
das Betätigungselement (62) ein Anhebeelement (82) aufweist, wobei das Anhebeelement (82) eine an dem Betätigungselement (62) angeordnete gegenüber einer Horizontalen geneigte Fläche aufweist, so dass ein Verschieben des Betätigungselements (62), ein Anheben des Bewegungselements (10), bewirkt.

2. Werkstückträgereinrichtung nach Anspruch 1, **dadurch gekennzeichnet, dass** das Anpresselement (60) eine in einem Winkel zur Transportrichtung (16) angeordnete Anpressfläche (64) aufweist, die vorzugsweise an dem Trägerelement (12) angeordnet ist.

3. Werkstückträgereinrichtung nach Anspruch 2, **dadurch gekennzeichnet, dass** das Anpresselement (60) eine zweite Anpressfläche (72) aufweist, die der ersten Anpressfläche (64) in Transportrichtung (16) gegenüberliegt.

4. Werkstückträgereinrichtung nach einem der Ansprüche 2 bis 3, **dadurch gekennzeichnet, dass** das Anpresselement (60) ein beim Bewegen des Trägerelements (12) an der ersten und/ oder zweiten Anpressfläche (64, 72) anliegendes Anlageelement (76) aufweist, das vorzugsweise um eine Querachse (78) drehbar ist.

5. Werkstückträgereinrichtung nach einem der Ansprüche 2 bis 4, **dadurch gekennzeichnet, dass** die erste Anpressfläche (64) und/ oder die zweite Anpressfläche (72) konkav ausgebildet ist.

6. Werkstückträgereinrichtung nach Anspruch 4 oder 5, **dadurch gekennzeichnet, dass** das Anlageelement (76) eine konvexe Oberfläche aufweist, insbesondere teilkugelförmig, kugelförmig, teilkegelförmig oder kegelförmig ausgebildet ist.

7. Werkstückträgereinrichtung nach einem der Ansprüche 1 bis 6, **dadurch gekennzeichnet, dass** das Trägerelement (12) und das Bewegungselement (10) über das Anpresselement (60) ausschließlich über Reibschluss miteinander verbunden sind.

8. Werkstückträgereinrichtung nach einem der Ansprüche 1 bis 7, **dadurch gekennzeichnet, dass** das Betätigungselement (62) ein insbesondere in Transportrichtung (16) der Werkstückträgereinrichtung vor dem Trägerelement (12) angeordnetes Anfahrelement (68) aufweist.

9. Werkstückträgereinrichtung nach Anspruch 8, **dadurch gekennzeichnet, dass** das Anfahrelement (68) mit einem vorzugsweise im Wesentlichen innerhalb des Trägerelements (12) angeordneten, insbesondere stabförmigen Verbindungselement (66) verbunden ist.

10. Werkstückträgereinrichtung nach einem der Ansprüche 1 bis 9, **dadurch gekennzeichnet, dass** in der Neutralstellung vorzugsweise durch das Betätigungselement (62) ein Anheben des Bewegungselements (10) zur Verringerung der Reibkräfte erfolgt.

11. Werkstückträgereinrichtung nach Anspruch 9 oder 10, **dadurch gekennzeichnet, dass** das Verbindungselement (66) das Betätigungselement (62) aufweist.

12. Werkstückträgereinrichtung nach einem der Ansprüche 1 bis 11, **dadurch gekennzeichnet, dass** das Verschieben des Betätigungselements (62) in horizontale Richtung ein Anheben des Bewegungselements in vertikale Richtung bewirkt.

13. Werkstückträgereinrichtung nach einem der Ansprüche 1 bis 12, **dadurch gekennzeichnet, dass** beim Überführen des Anpresselements (60) in die Neutralstellung das Anlageelement (76) des Anpresselements (60) mit der geneigten Fläche (84) in Kontakt kommt.

14. Werkstückträgereinrichtung nach einem der Ansprüche 1 bis 13, **dadurch gekennzeichnet, dass** das Trägerelement (12) mit mindestens einem vom Bewegungselement (10) unabhängigen Abstützelement zur Aufnahme zumindest eines Teils des Werkstückgewichts verbunden ist, wobei das Abstützelement (28) vorzugsweise an einer Unterseite des Trägerelements (12) angeordnet ist.

## Claims

1. A workpiece carrier device intended to be placed loosely on friction conveyors, comprising
a motion element (10) having a friction surface (18) contacting a friction conveyor for the transfer of movement by means of friction forces, and a carrier element (12) for receiving a workpiece, said element being connected with the motion element (10) through a connecting element (22), wherein the connecting element (22) comprises a pressing element (60) which is configured such that, due to the weight of the carrier element (12) and/or of the workpiece arranged on the carrier element (12), it exerts a contact pressure force from the carrier element (12) on the motion element (10) in the direction of the friction conveyor when the motion element (10) is moved in the direction of transport (16),
wherein the pressing element (60) has a neutral position, in which no contact pressure force is exerted, and a movement position, in which contact pressure force is transmitted, and wherein the device comprises an actuator element (62) connected with the pressing element (60) is provided for moving the pressing element (60) to a neutral and/or a movement position,
**characterized in that**
the actuator element (62) comprises a lifting element (82), wherein the lifting element (82) has a surface provided at the actuator element (62), which surface is inclined with respect to a horizontal, so that a displacement of the actuator element (62) causes a lifting of the motion element (10).

2. The workpiece carrier device of claim 1, **characterized in that** the pressing element (60) has a pressing surface (64) arranged under an angle with respect to the direction of transport (16), said surface preferably being provided on the carrier element (12).

3. The workpiece carrier device of claim 2, **characterized in that** the pressing element (60) has a second pressing surface (72) that is situated opposite the first pressing surface (64) in the direction of transport (16).

4. The workpiece carrier device of one of claims 2 to 3, **characterized in that** the pressing element (60) comprises a contact element (76) preferably rotatable around a transverse axis (78), said contact element resting on the first and/or second pressing surface (64, 72) when the carrier element (12) is moved.

5. The workpiece carrier device of one of claims 2 to 4, **characterized in that** the first pressing surface (64) and/or the second pressing surface (72) are concave in shape.

6. The workpiece carrier device of claim 4 or 5, **characterized in that** the contact element (76) has a convex surface, which is in particular shaped as a part of a sphere, a sphere, a part of a cone or a cone.

7. The workpiece carrier device of one of claims 1 to 6, **characterized in that** the connection between the carrier element (12) and the motion element (10) via the pressing element (60) is effected exclusively by friction engagement.

8. The workpiece carrier device of one of claims 1 to 7, **characterized in that** the actuator element (62) comprises an approaching element (68) arranged in particular in front of the carrier element (12), seen in the direction of transport (16) of the workpiece carrier device.

9. The workpiece carrier device of claim 8, **characterized in that** the approaching element (68) is connected with an especially rod-shaped connecting element (66) preferably provided substantially within the carrier element (12).

10. The workpiece carrier device of one of claims 1 to 9, **characterized in that** in the neutral position, the motion element (10) is lifted preferably by the actuator element (62) so as to reduce friction forces.

11. The workpiece carrier device of claim 9 or 10, **characterized in that** the connecting element (66) comprises the actuator element (62).

12. The workpiece carrier device of one of claims 1 to 11, **characterized in that** a horizontal displacement of the actuator element (62) causes a vertical lifting of the motion element.

13. The workpiece carrier device of one of claims 1 to 12, **characterized in that** during the displacement of the pressing element (60) to the neutral position, the contact element (76) of the pressing element (60) contacts said inclined surface (84).

14. The workpiece carrier device of one of claims 1 to 13, **characterized in that** the carrier element (12) is connected with at least one support element independent of the movement element (10), which support element is provided for absorbing at least a part of the weight of the workpiece, the support element (28) preferably being arranged at a bottom surface of the carrier element (12).

## Revendications

1. Dispositif porte-pièce destiné à être placé de façon amovible sur des transporteurs à friction, ledit dispositif comportant
un élément de déplacement (10) présentant une surface de friction (18) portant sur le transporteur à friction et destinée à transmettre le déplacement au moyen de forces de friction, et un élément de support (12) relié à l'élément de déplacement (10) par un élément de liaison (22) et destiné à recevoir une pièce, l'élément de liaison (22) comportant un élément de pressage (60) qui est conformé de telle sorte que, lorsque l'élément de déplacement (10) se déplace dans la direction de transport (16) à partir de l'élément de support (12) l'élément de déplacement (10) exerce en raison du poids de l'élément de support (12) et/ou de la pièce disposée sur l'élément de support (12) une force de pressage en direction du transporteur à friction,
l'élément de pressage (60) possédant une position neutre dans laquelle aucune force de pressage n'est exercée et une position de déplacement dans laquelle une force de pressage est transmise, et le dispositif comportant un élément d'actionnement (62) relié à l'élément de pressage (60) et destiné à transférer l'élément de pressage (60) dans la position neutre et/ou une position de déplacement, **caractérisé en ce que**
l'élément d'actionnement (62) comporte un élément de levage (82), l'élément de levage (82) présentant une surface inclinée par rapport à une horizontale et disposée au niveau de l'élément d'actionnement (62) de sorte qu'une translation de l'élément d'actionnement (62) provoque un soulèvement de l'élément de déplacement (10).

2. Dispositif porte-pièce selon la revendication 1, **caractérisé en ce que** l'élément de pressage (60) présente une surface de pressage (64) qui est disposée angulairement par rapport à la direction de transport (16) et qui est disposé de préférence au niveau de l'élément de support (12).

3. Dispositif porte-pièce selon la revendication 2, **caractérisé en ce que** l'élément de pressage (60) présente une deuxième surface de pressage (72) qui est opposée à la première surface de pressage (64) par référence à la direction de transport (16).

4. Dispositif porte-pièce selon l'une des revendications 2 à 3, **caractérisé en ce que** l'élément de pressage (60) comporte un élément d'appui (76) qui porte contre la première et/ou la deuxième surface de pressage (64, 72) lors du déplacement de l'élément de support (12) et qui est apte à tourner de préférence autour d'un axe transversal (78).

5. Dispositif porte-pièce selon l'une des revendications 2 à 4, **caractérisé en ce que** la première surface de pressage (64) et/ou la deuxième surface de pressage (72) ont une conformation concave.

6. Dispositif porte-pièce selon la revendication 4 ou 5, **caractérisé en ce que** l'élément d'appui (76) présente une surface convexe, notamment conformée en cône, en cône partiel, en sphère ou sphère partielle.

7. Dispositif porte-pièce selon l'une des revendications 1 à 6, **caractérisé en ce que** l'élément de support (12) et l'élément de déplacement (10) sont reliés l'un à l'autre par l'élément de pressage (60) exclusivement par friction.

8. Dispositif porte-pièce selon l'une des revendications 1 à 7, **caractérisé en ce que** l'élément d'actionnement (62) possède un élément tampon (68) disposé notamment en avant de l'élément de support (12) par référence à la direction de transport (16) du dispositif porte-pièce.

9. Dispositif porte-pièce selon la revendication 8, **caractérisé en ce que** l'élément tampon (68) est relié à un élément de liaison (66), notamment en forme de barre, qui est disposé de préférence sensiblement à l'intérieur de l'élément de support (12).

10. Dispositif porte-pièce selon l'une des revendications 1 à 9, **caractérisé en ce que**, dans la position neutre, un soulèvement de l'élément de déplacement (10) est effectué de préférence par l'élément d'actionnement (62) dans le but de réduire les forces de friction.

11. Dispositif porte-pièce selon la revendication 9 ou 10, **caractérisé en ce que** l'élément de liaison (66) comporte l'élément d'actionnement (62).

12. Dispositif porte-pièce selon l'une des revendications 1 à 11, **caractérisé en ce que** la translation de l'élément d'actionnement (62) dans une direction horizontale provoque un soulèvement de l'élément de déplacement dans une direction verticale.

13. Dispositif porte-pièce selon l'une des revendications 1 à 12, **caractérisé en ce que**, lors du transfert de l'élément de pressage (60) dans la position neutre, l'élément d'appui (76) de l'élément de pressage (60) vient en contact avec la surface inclinée (84).

14. Dispositif porte-pièce selon l'une des revendications 1 à 13, **caractérisé en ce que** l'élément de support (12) est relié à au moins un élément de soutien indépendant de l'élément de déplacement (10) et destiné à recevoir au moins une partie du poids de la pièce, l'élément de soutien (28) étant disposé de préférence sur un côté inférieur de l'élément de support (12).
